# EUROPÄISCHE PATENTSCHRIFT

(11) **EP 1 172 263 B1**
(45) Veröffentlichungstag und Bekanntmachung des Hinweises auf die Patenterteilung: **14.12.2005**
(21) Anmeldenummer: 01115768.2
(22) Anmeldetag: 10.07.2001
(51) Int. Cl.: B60R 21/16, B60R 21/20

(54) **Gassackmodul mit einer eine Einbuchtung aufweisenden Airbagvorderwand**
Airbag module with an airbag front wall comprising a recess
Module avec une paroi de coussin gonflable présentant un renfoncement

(30) Priorität: 13.07.2000 DE 20012077 U; 28.12.2000 DE 10065465
(43) Veröffentlichungstag der Anmeldung: 16.01.2002
(73) Patentinhaber: TRW Automotive Safety Systems GmbH, 63743 Aschaffenburg (DE)
(72) Erfinder: Bohn, Stefan, 63773 Goldbach (DE); Fellhauer, Joachim, 63741 Nilkheim (DE)
(74) Vertreter: Kitzhofer, Thomas

(56) Entgegenhaltungen:
- DE-A- 4 010 767
- DE-A- 19 816 080
- GB-A- 2 311 043
- GB-A- 2 343 420
- US-A- 6 042 147

## Beschreibung

Die Erfindung betrifft ein Gassackmodul nach dem Oberbegriff des Anspruch 1.

Derartige ringförmige Gassäcke haben den Vorteil, daß der Zentrumsabschnitt an einer Bewegung in Richtung zum Insassen gehindert wird, indem er am Modul befestigt bleibt. Die Rückhaltung erfolgt dann über die ringförmige Vorderwand um die Einbuchtung herum. Die Einbuchtung selbst wird nicht mit Gas befüllt und ist nach außen hin offen. Solche Gassäcke sind als Front-Gassäcke entweder im Lenkrad oder im Armaturenbrett untergebracht. Die Einbuchtung soll so klein wie möglich sein, damit eine ausreichend große Rückhaltefläche zur Verfügung steht.

Die DE 40 10 767 A1 zeigt ein Gassackmodul, bei dem eine Modulabdeckung im Auslösefall durch kurze Fangbänder gehalten wird, wodurch eine ringförmige Austrittsöffnung für den Gassack um die in Richtung des Insassen verlagerte Abdeckung herum entsteht. Der mittlere Bereich der Gassackvorderwand ist flächig mit der Abdeckung verbunden und wird daher im Auslösefall durch diese zurückgehalten, wodurch eine dem Insassen zugewandte Einbuchtung im Gassack entsteht.

Aus der gattungsbildenden US-A-6,042,147 ist ein Gassackmodul der eingangs genannten Art bekannt, bei dem eine Einbuchtung im Gassack dadurch geschaffen wird, daß ein zentraler Abschnitt des die Vorderwand bildenden Gassackgewebes an der Oberseite eines den Gasgenerator umgebenden Käfigs befestigt ist und so beim Aufblasen des Gassacks an einer Bewegung gehindert wird.

Die Erfindung schafft ein Gassackmodul, insbesondere ein Front-GassackModul, das den Insassen bei einem Frontalaufprall schützen soll. Bei dem Gassackmodul nach der Erfindung soll sich die Einbuchtung wenigstens teilweise, vorzugsweise sogar vollständig selbst schließen. Dies wird bei einem Gassackmodul der eingangs genannten Art dadurch erreicht, daß die Öffnung schlitzförmig ausgebildet ist, so daß der Zuschnitt der Vorderwand, d.h. des die Vorderwand bildenden Gewebeteils, das Schließen der Einbuchtung hervorruft.

Der Schlitz ist gemäß der bevorzugten Ausführungsform geradlinig und langgestreckt.

Er kann darüber hinaus aber auch V-, T-, H-förmig, in Form eines Doppel-T oder kreuzförmig ausgebildet sein.

Darüber hinaus kann auch ein C-förmiger Schlitz vorgesehen sein.

Der Zuschnitt der Gewebeteile und die Geometrie der Öffnung sind gemäß der bevorzugten Ausführungsform so aufeinander abgestimmt, daß die Einbuchtung nahe der Öffnung in vollständig aufgeblasenem Zustand des Gassacks wenigstens annähernd, vorzugsweise vollständig geschlossen ist, indem Abschnitte des die Einbuchtung definierenden Gewebeteils aneinander anliegen.

Der Gassack schließt sich somit vorzugsweise nahe an der Öffnung selbst, wobei im Bereich der Einbuchtung die Gewebeteile großflächig aneinander anliegen können, so daß im aufgeblasenen Zustand die Einbuchtung nicht mehr sichtbar ist.

Um das Schließen noch zu unterstützen, ist es möglich, an den aneinander anliegenden Abschnitten ein Haltemittel vorzusehen, das die Abschnitte bei Kontakt aneinanderhält. Ein solches Haltemittel kann beispielsweise ein Klettband sein. Hintergrund dieser Ausführungsform ist folgender: Der Entfaltungsvorgang ist ein dynamischer Prozeß. Der Gassack wird sich zuerst radial schräg nach außen entfalten, so daß der Schlitz zur großen Öffnung wird. Anschließend fallen die Gewebeteile, die die Einbuchtung bilden, radial nach innen, und gegenüberliegende Abschnitte der Gewebeteile prallen aufeinander. Die Einbuchtung ist jetzt geschlossen. Es kann jedoch ein Zurückprallen des Gewebes auftreten, so daß die Einbuchtung wieder geöffnet wird. Dieser Vorgang kann sogar zu einem gewissen Pulsieren der Einbuchtung führen, d.h. einem wiederholten Öffnen und Schließen. Damit erreicht wird, daß dem Insassen eine geschlossene Vorderwand als Aufprallfläche zur Verfügung steht, ist das Haltemittel vorgesehen, das das Pulsieren unterbinden soll.

Beim erfindungsgemäßen Gassackmodul ist zu beachten, daß die Modulabdeckung eine ringförmige Austrittsöffnung freigibt, wodurch ein Mittelteil der Abdeckung, das über dem Zentrumsabschnitt liegt, nicht nach außen beim Öffnen der Abdeckung bewegt wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Querschnittsansicht durch eine Ausführungsform des erfindungsgemäßen Gassackmoduls,
Figuren 2 bis 8 Draufsichten auf die Vorderwand gemäß verschiedenen Ausführungsformen.

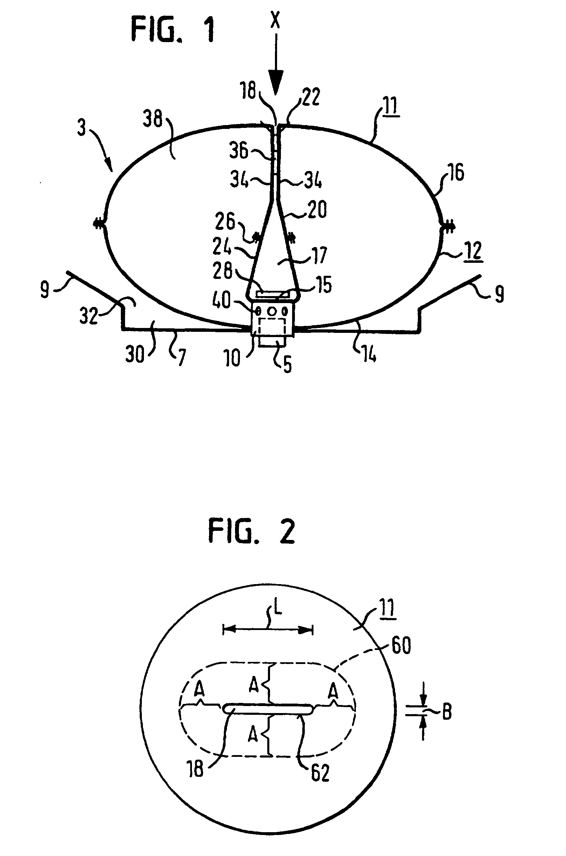

In Figur 1 ist ein Gassackmodul dargestellt, das einen Gassack 3, einen Gasgenerator 5 und ein Modulgehäuse 7 mit einer Modulabdeckung 9 aufweist. Der Gasgenerator 5 wird von einem topf- oder glockenförmigen Diffusor 10 umgeben, der von oben über den Gasgenerator 5 gestülpt ist und am Modul, genauer am Modulgehäuse 7 befestigt ist. Der Gassack hat eine Gassackwand, die mehrere Abschnitte hat und aus mehreren Gewebeteilen besteht. Eine Vorderwand 11 ist dem Insassen im aufgeblasenen Zustand zugewandt, auf sie kann der Insasse prallen. Darüber hinaus ist eine Rückwand 12 vorgesehen. Von der Vorderwand 11 aus erstreckt sich in der Mitte des Gassacks, also im Zentrum, eine Einbuchtung 17 in Richtung Gasgenerator 5, die nicht mit Gas befüllt wird.

Der Gassack 3 besteht im wesentlichen aus vier Gewebeteilen, die allesamt ringförmig ausgebildet sind. Ein Gewebeteil 14 bildet die Rückwand 12, ein anderes Gewebeteil 16 die Vorderwand 11. Das Gewebeteil 16 hat eine Öffnung 18, die in der Mitte des Gassacks angeordnet ist und den Übergang zur Einbuchtung bildet. Ein Gewebeteil 20 ist am Rand der Öffnung an das Gewebeteil 16 angenäht, wobei die entsprechende Naht mit 22 bezeichnet ist. Ein viertes Gewebeteil 24 ist mit einer Naht 26 am Gewebeteil 20 festgenäht und weist den Zentrumsabschnitt 15 auf, der am Diffusor 10 anliegt und an diesem befestigt ist.

Die Modulabdeckung hat einen Mittelteil 28, der über dem Zentrumsabschnitt 15 liegt und ebenfalls bleibend am Diffusor 10 befestigt ist. Zur Befestigung dieses Mittelteils 28 ist im Inneren des Mittelteils ein Verstärkungsblech vorgesehen, von dem Gewindebolzen abstehen, die durch den Zentrumsabschnitt 15 und den Diffusor 10 ragen, um von unten mit Muttern verschraubt zu werden. Der Zentrumsabschnitt 15 zusammen mit dem Mittelteil 28 werden dadurch am Diffusor bleibend befestigt und an einer Bewegung beim Aktivieren des Gassackmoduls gehindert.

Der Gassack 3 ist im gefalteten Zustand in einem Ringraum 30 zwischen Diffusor 10 und Außenwand des Modulgehäuses 7 untergebracht. Die Abdeckung 9 hat neben dem Mittelteil eine aus mehreren Segmenten zusammengesetzte ringförmige Klappenausbildung, die eine ringförmige Austrittsöffnung 32 im noch nicht aktivierten Zustand des Gasgenerators abdeckt.

Wie in Figur 1 zu erkennen ist, wird die Einbuchtung 17 nahe der Öffnung 18 dadurch geschlossen, daß gegenüberliegende Abschnitte 34 der Gassackwand, genauer des Gewebeteils 20, aneinander anliegen.

Damit diese Abschnitte 34 bereits bei ihrem ersten Kontakt bleibend aneinandergehalten werden, ist innenseitig an den gegenüberliegenden Abschnitten ein Haltemittel in Form eines Klettverschlusses 36 angebracht.

Der Zuschnitt der Gewebeteile und die Geometrie der Öffnung 18 können aber so aufeinander abgestimmt sein, daß die Einbuchtung 17 unmittelbar angrenzend an die Öffnung 18 im voll aufgeblasenen Zustand des Gassacks geschlossen wird.

Der dargestellte Gassack 3 ist ein sogenannter Front-Gassack, der bei einem Frontalaufprall den Insassen schützen soll und im Lenkrad oder in der Armaturentafel untergebracht ist.

Im Rückhaltefall wird Gas vom Gasgenerator 5 in das Innere des Gassacks, in die dort ausgebildete ringförmige Kammer 38 eingeblasen, die die Einbuchtung 17 umgibt. Der Gassack entfaltet sich nach oben, in Richtung des Insassen, und drückt die Abdeckung 9 auf. Das Mittelteil 28 bleibt stehen. Über die ringförmige Austrittsöffnung 32 gelangt der Gassack aus dem Modul heraus und bewegt sich aufgrund der radial gerichteten Ausströmöffnungen 40 im Diffusor kegelförmig schräg nach außen, um dann beim weiteren Aufblasvorgang sich nach innen auszubreiten. Sobald die Abschnitte 34 einander das erste Mal berühren, bleiben sie aneinander befestigt aufgrund des Klettverschlusses 36. Der Zentrumsabschnitt 15 wird an jeglicher Bewegung gehindert und zurückgehalten.

Das Schließen der Einbuchtung 17 möglichst nahe an der Öffnung 18 wird hauptsächlich durch einen geeigneten Zuschnitt des Gewebeteils 16 hervorgerufen.

Möglichkeiten dieses Zuschnitts sind in den folgenden Figuren zu erkennen, die eine Ansicht in Richtung des Pfeiles X auf den Gassack im ausgebreiteten Zustand, d.h. in nicht aufgeblasenem, ungefalteten Zustand zeigt. Zu betonen ist jedoch, daß bis auf eine gewisse Faltenbildung die entsprechend ausgebildeten Gassäcke im vollständig aufgeblasenen Zustand mit Blick auf die Vorderwand genauso aussehen wie in den folgenden Figuren dargestellt.

Zur Unterstützung des Schließens der Einbuchtung 17 ist die Öffnung 18 in der Vorderwand 11, genauer im Gewebeteil 16 nicht kreisringförmig, sondern schlitzförmig ausgebildet. Gemäß Figur 2 ist der Schlitz langgestreckt und geradlinig, wobei die Länge des Schlitzes L mehr als fünfmal so groß ist wie die Breite B des Schlitzes.

In Figur 2 ist zwar dargestellt, daß die Öffnung 18 durch Ausschneiden eines Schlitzes, also Ausschneiden eines Gewebeteiles gebildet wird, sie kann aber auch dadurch gebildet sein, daß nur ein langgestreckter Schnitt durch das Gewebeteil 16 vorgesehen ist. Mit unterbrochenen Linien ist das an den Rand 62 der Öffnung 18 angenähte, ausgebreitete Gewebeteil 20 dargestellt. Es ist gut zu erkennen, daß der äußere Rand 60 des Gewebeteils 20 einen stets gleichbleibenden Abstand A vom Rand 62 der Öffnung 18 hat. Dadurch soll erreicht werden, daß die Bewegung des gesamten Randes 62 entgegen der Richtung des Pfeiles X in Figur 1 gleichmäßig durch die Gewebeteile 20, 24 begrenzt wird. Die Gewebeteile 20, 24 wirken nämlich als eine Art Fangband für den Rand 62.

Die schlitzartige Öffnung 18 muß von ihrer Geometrie so beschaffen sein, daß der Rand 62 beim Entfalten am Mittelteil 28 entlang in Richtung nach außen entlanggleiten kann. Somit muß die umlaufende Länge des Randes 62 geringfügig größer als der Umfang des Mittelteils 28 sein, welches normalerweise kreisringförmig ist.

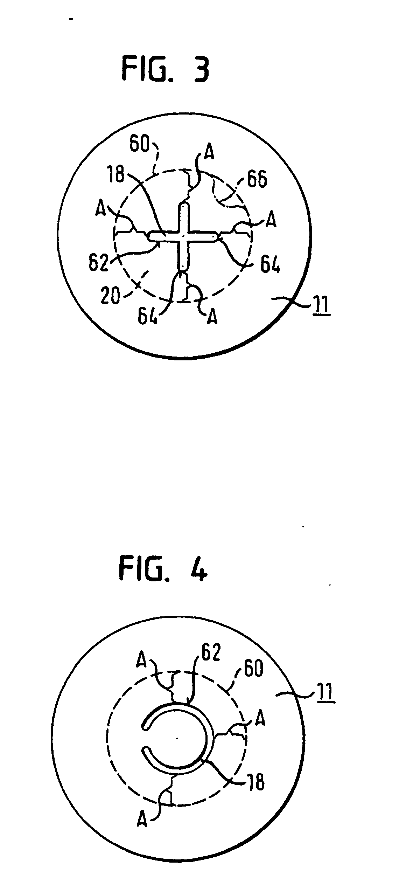

Figur 3 zeigt einen die Öffnung 18 bildenden, kreuzförmigen Schlitz, dessen radial äußerste Stellen 64 stets den gleichen Abstand zum Rand 60 des Gewebeteils 20 haben, so daß erneut wenigstens der größte Teil des Randes 62 in gleichem Abstand vom Diffusor 10 zurückgehalten wird. Die Tatsache, daß der Rand 60 zwischen den äußersten Stellen 64 keine der Kreuzform folgende Einbuchtung hat, sorgt für einen Überschuß an Gewebewand im Bereich der Einbuchtung, was ein Einanderberühren von Abschnitten 34 unterstützt und sicherstellt. Darüber hinaus ist es aber durchaus denkbar, daß, wie es mit strichpunktierten Linien dargestellt ist, noch entsprechende Einbuchtungen zwischen den äußersten Stellen 64 am Rand 60 vorgesehen sind. Es ist nur eine solche Einbuchtung exemplarisch dargestellt, die das Bezugszeichen 66 trägt.

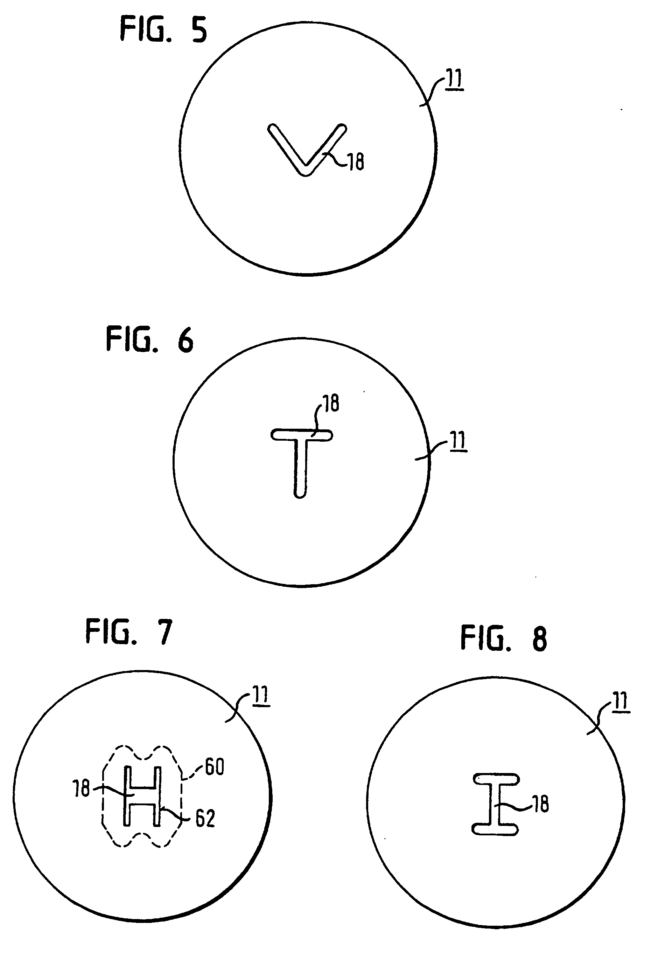

Bei der Ausführungsform nach Figur 4 ist die Öffnung 18 in Form eines C-förmigen Schlitzes ausgeführt. Der Rand 60 ist kreisförmig und hat einen gleichmäßigen Abstand A vom Rand 60.

Bei der Ausführungsform nach Figur 5 ist die Öffnung 18 ein V-förmiger Schlitz, bei der Ausführungsform nach Figur 6 ein T-förmiger Schlitz, bei der Ausführungsform nach Figur 7 ein H-förmiger Schlitz, und bei der Ausführungsform nach Figur 8 hat der Schlitz die Form eines Doppel-"T".

Bei den Figuren 5, 6 und 8 sind die Gewebeteile 20 nicht dargestellt, nur bei Figur 7. Figur 7 zeigt eine Art schmetterlingsförmig verlaufenden Rand 60.

## Patentansprüche

1. Gassackmodul, mit einem Gassack (3), der eine Vorderwand (11) zum Aufprall des Insassen aufweist, wobei der Gassack (3) durch eine Gassackwand aus mehreren Gewebeteilen (14, 16, 20, 24) gebildet ist und im aufgeblasenen Zustand eine Einbuchtung (17) aufweist, die dadurch gebildet ist, daß ein Zentrumsabschnitt (15) der Gassackwand beim Aufblasen an einer freien Bewegung gehindert und zurückgehalten wird, wobei der Gassack (3) eine ringförmige, zu befüllende Kammer (38) um die Einbuchtung (17) herum aufweist, **dadurch gekennzeichnet, daß** das die Vorderwand (11) bildende Gewebeteil (16) eine schlitzförmige Öffnung (18) aufweist, von der aus die Einbuchtung (17) ausgeht und zum Zentrumsabschnitt (15) verläuft.

2. Gassackmodul nach Anspruch 1, **dadurch gekennzeichnet, daß** der Schlitz geradlinig und langgestreckt ist.

3. Gassackmodul nach Anspruch 1, **dadurch gekennzeichnet, daß** der Schlitz V-, T-, oder H-förmig, in Form eines Doppel-T oder kreuzförmig ausgebildet ist.

4. Gassackmodul nach Anspruch 1, **dadurch gekennzeichnet, daß** der Schlitz C-förmig ist.

5. Gassackmodul nach einem der vorhergehenden Ansprüche, **dadurch gekennzeichnet, daß** der Zuschnitt der Gewebeteile (14, 16, 20, 24) und die Geometrie der Öffnung (18) so aufeinander abgestimmt sind, daß die Einbuchtung (17) nahe der Öffnung (18) in vollständig aufgeblasenem Zustand des Gassacks (3) wenigstens nahezu geschlossen ist, indem Abschnitte (34) des die Einbuchtung (17) definierenden Gewebeteils (20) aneinander anliegen.

6. Gassackmodul nach Anspruch 5, **dadurch gekennzeichnet, daß** an den aneinander anliegenden Abschnitten (34) ein Haltemittel (36) vorgesehen ist, das die Abschnitte (34) bei Kontakt aneinanderhält.

7. Gassackmodul nach Anspruch 6, **dadurch gekennzeichnet, daß** das Haltemittel (36) ein Klettverschluß ist.

8. Gassackmodul nach einem der vorhergehenden Ansprüche, **dadurch gekennzeichnet, daß** die Öffnung (18) in der Vorderwand (11) wenigstens an den radial äußersten Stellen (64) einen gleichen radialen Abstand (A) von einem Rand eines Gewebeteils (20) aufweist, das die Einbuchtung (17) definiert.

## Claims

1. A gas bag module, comprising a gas bag (3) which has a front wall (11) for impact of the occupant, the gas bag (3) being formed by a gas bag wall made up of several fabric parts (14, 16, 20, 24) and in the inflated state having an indentation (17) which is formed in that during inflation a center section (15) of the gas bag wall is prevented from moving freely and is held back, the gas bag (3) having around the indentation (17) an annular chamber (38) to be filled, **characterized in that** the fabric part (16) forming the front wall (11) has a slit-shaped opening (18) from which the indentation (17) originates and extends to the center section (15).

2. The gas bag module according to claim 1, **characterized in that** the slit is straight-lined and elongated.

3. The gas bag module according to claim 1, **characterized in that** the slit is designed in the shape of a V, T or H, a double T or in a cross shape.

4. The gas bag module according to claim 1, **characterized in that** the slit is C-shaped.

5. The gas bag module according to any of the preceding claims, **characterized in that** the cut of the fabric parts (14, 16, 20, 24) and the geometry of the opening (18) are adapted to each other such that the indentation (17) in the vicinity of the opening (18) is at least almost closed in the fully inflated state of the gas bag (3) **in that** sections (34) of the fabric part (20) defining the indentation (17) lie against each other.

6. The gas bag module according to claim 5, **characterized in that** a holding means (36) is provided on the sections (34) lying against each other, the holding means holding the sections (34) against each other on contact.

7. The gas bag module according to claim 6, **characterized in that** the holding means (36) is a Velcro fastener.

8. The gas bag module according to any of the preceding claims, **characterized in that** at least at the radially outermost points (64) the opening (18) in the front wall (11) has an equal radial distance (A) from an edge of a fabric part (20) which defines the indentation (17).

## Revendications

1. Module de coussin à gaz, comportant un coussin à gaz (3) qui présente une paroi antérieure (11) prévue pour l'impact du passager, le coussin à gaz (3) étant formé par une paroi de coussin à gaz réalisée à partir de plusieurs parties de tissu (14, 16, 20, 24) et présentant à l'état gonflé un creux (17) qui est formé par le fait qu'un tronçon central (15) de la paroi de coussin à gaz est empêché de se mouvoir et est retenu, le coussin à gaz (3) présentant autour du creux (17) une chambre (38) annulaire à remplir, **caractérisé en ce que** la partie de tissu (16) formant la paroi antérieure (11) présente une ouverture (18) en forme de fente depuis laquelle le creux (17) provient et s'étend vers le tronçon central (15).

2. Module de coussin à gaz selon la revendication 1, **caractérisé en ce que** la fente est rectiligne et allongée.

3. Module de coussin à gaz selon la revendication 1, **caractérisé en ce que** la fente est réalisée en forme de V, de T ou de H, sous forme d'un double T ou sous forme de croix.

4. Module de coussin à gaz selon la revendication 1, **caractérisé en ce que** la fente est réalisée en forme de C.

5. Module de coussin à gaz selon l'une des revendications précédentes, **caractérisé en ce que** la coupe des parties de tissu (14, 16, 20, 24) et la géométrie de l'ouverture (18) sont adaptées l'une à l'autre de telle sorte que le creux (17) est au moins presque fermé à proximité de l'ouverture (18) à l'état entièrement gonflé du coussin à gaz (3), par le fait que des tronçons (34) de la partie de tissu (20) définissant le creux (17) sont adjacents l'un à l'autre.

6. Module de coussin à gaz selon la revendication 5, **caractérisé en ce que** sur les tronçons (34) adjacents l'un à l'autre est prévu un moyen de retenue (36) qui maintient les tronçons (34) en cas de contact.

7. Module de coussin à gaz selon la revendication 6, **caractérisé en ce que** le moyen de retenue (36) est une fermeture autoagrippante.

8. Module de coussin à gaz selon l'une des revendications précédentes, **caractérisé en ce que** l'ouverture (18) dans la paroi antérieure (11) présente au moins aux points (64) radialement les plus extrêmes une même distance radiale (A) par rapport à un bord d'une partie de tissu (20) qui définit le creux 17).
